# EUROPEAN PATENT APPLICATION

(11) **EP 2 716 419 A1**
(43) Date of publication of application: **09.04.2014**
(21) Application number: 11866521.5
(22) Date of filing: 01.06.2011
(51) Int. Cl.: B25J 17/00, F16H 21/46

(54) **MULTIJOINT ROBOT**

(71) Applicant: Kabushiki Kaisha Yaskawa Denki, Kitakyushu-shi, Fukuoka 806-0004 (JP)
(72) Inventor: MAMBA Takashi, Kitakyushu-shi Fukuoka 806-0004 (JP)
(74) Representative: Viering, Jentschura & Partner Patent- und Rechtsanwälte
(86) International application number: PCT/JP2011/062629
(87) International publication number: WO 2012/164705

(57) **Abstract**

[Problem to be solved]

A multijoint robot which has excellent workability and designability can be realized while a wide movable range is ensured.
[Solution] A robot (2) includes a first link member (7), intermediate link members (8A,8B) connected to the first link member (7) rotatably around a first joint axis (14), a second link member (9) which is connected to the intermediate link members (8A,8B) rotatably around a second joint axis (15) and in which small link members (9A,9B) are connected with each other capable of relative rotation around a rotation axis (17), and joints (5,6). The joint (6) has a double joint structure composed of the first link member (7), the intermediate link members (8A,8B), and the second link member (9). The robot (2) has bevel gears (19,20) disposed facing each other on the second joint axis (15), motors (12,13) for transmitting a driving force to the bevel gears (19,20), and a bevel gear (21) meshed with both the bevel gears (19,20) and connected to the second small link member (9B) by a rotating shaft (28) disposed along the rotation axis (17).

## Description

### TECHNICAL FIELD

A disclosed embodiment relates to a multijoint robot having a differential mechanism using a bevel gear in a joint.

### BACKGROUND ART

In a multijoint robot such as a manipulator and a robot arm, a multijoint robot having a differential mechanism using a bevel gear in a joint is known (See Patent Literature 1, for example). This multijoint robot includes a first and a second gear, driving sources for rotating the respective gears, and a rod-shaped member arranged in a direction crossing a center axis direction of the first gear, and by rotating the first and second gears in the same direction, the rod-shaped member is rotated around the center axis of the first gear and by rotating the first and second gears in different directions, the rod-shaped member is rotated around the center axis of the rod-shaped member.

### Prior Art Document

### Patent Document

Patent Document 1: JP, A, 2010-264519

### DISCLOSURE OF THE INVENTION

### Problem to be solved by the Invention

By providing a differential mechanism using a bevel gear in a joint of a multijoint robot, following problems may occur. For example, in the case of a robot arm in which an upper arm portion and a lower arm portion are connected by an elbow joint, capable of bending, as a multijoint robot, if a joint axis of the elbow joint is provided at a substantially center position in a thickness direction of the arm, the upper arm portion and the lower arm portion interfere with each other, a relative angle between the upper arm portion and the lower arm portion is restricted, and a movable range is narrowed. Thus, the joint axis is generally provided on the one end side in the arm thickness direction by being offset. However, if the differential mechanism using the bevel gear is provided in the elbow joint, since the joint axis and a rotation axis along a longitudinal direction of the arm portion on one side (the arm portion on the side to be differentially driven. The lower arm portion, for example) cannot be provided by being offset in the arm thickness direction, the joint axis is configured to be offset only with respect to the arm portion on the other side (the upper arm portion, for example). As a result, when the arm is extended, the upper arm portion and the lower arm portion are not coaxial with each other, and the elbow joint portion of the arm portion on the other side becomes bulky. Thus, workability and designability of the robot are deteriorated.

The present invention was made in view of the aforementioned problems and has an object to provide a multijoint robot which is excellent in workability and designability while a wide movable range is ensured.

### Means for Solving the Problem

In order to solve the above-mentioned problem, according to an aspect of the present invention, there is provided a multijoint robot having a plurality of link members and a plurality of joints, wherein at least one of the plurality of joints comprises a double joint structure comprising a first link member, an intermediate link member connected to the first link member rotatably around a first joint axis, and a second link member which is connected to the intermediate link member rotatably around a second joint axis and in which two small link members are connected capable of relative rotation around a rotating axis along a longitudinal direction of the link member, a first bevel gear and a second bevel gear disposed facing each other on the second joint axis, a first actuator configured to transmit a driving force to the first bevel gear and a second actuator configured to transmit a driving force to the second bevel gear, and a third bevel gear meshed with both the first bevel gear and the second bevel gear and connected to one of the small link members by a rotating shaft disposed along the rotating axis.

### Advantages of the Invention

According to the present invention, a multijoint robot which is excellent in workability and designability while a wide movable range is ensured can be realized.

### BRIEF DESCRIPTION OF THE DRAWINGS

Fig. 1 is a conceptual explanatory diagram for explaining a robot system provided with a robot according to an embodiment.
Fig. 2 is a conceptual explanatory diagram for explaining a detailed structure of a joint having a double joint structure.
Fig. 3 is a conceptual explanatory diagram for explaining operations of a first link member, an intermediate link member, and a second link member.
Fig. 4A is a conceptual explanatory diagram for explaining a problem of a joint according to a comparative example.
Fig. 4B is a conceptual explanatory diagram for explaining a problem of a joint according to a comparative example.
Fig. 4C is a conceptual explanatory diagram for explaining a problem of a joint according to a comparative example.
Fig. 5 is a conceptual explanatory diagram for explaining a detailed structure of a joint having a double joint structure in a variation in which a motor is disposed in a bevel gear.
Fig. 6 is a conceptual explanatory diagram for explaining a detailed structure of the joint having the double joint structure in a variation in which a driving force of the motor is transmitted by using a pulley.
Fig. 7 is a conceptual explanatory diagram for explaining a detailed structure of the joint having the double joint structure in a variation in which a driving force of the motor is transmitted by using a bevel gear.

### BEST MODE FOR CARRYING OUT THE INVENTION

An embodiment will be described below by referring to the attached drawings.

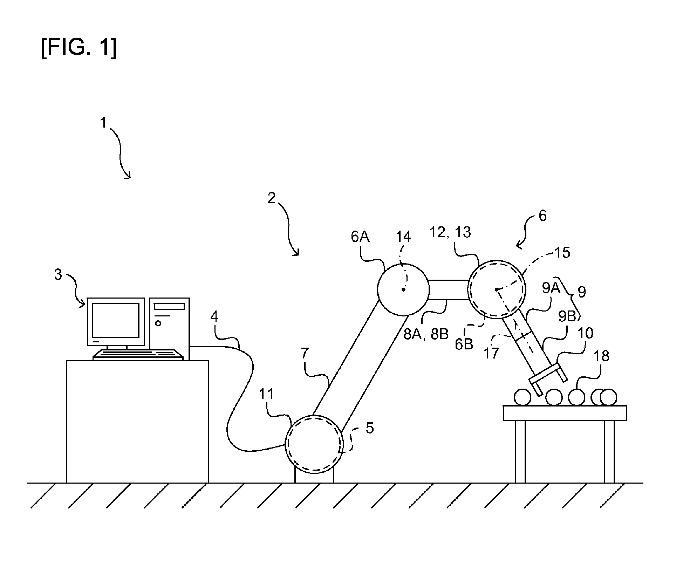

As illustrated in Fig. 1, a robot system 1 includes a robot 2 (a multijoint robot) and a control unit (a microcomputer 3 in this example) for controlling an operation of this robot 2. The robot 2 and the microcomputer 3 are connected via a cable 4, capable of mutual communication (or may be connected via wireless). The control unit may be installed on the robot 2 side.

The robot 2 is a 2-joint robot in this example and includes two joints 5 and 6, a first link member 7, intermediate link members 8A and 8B, a second link member 9, and an end effector (a robot hand 10 in this example). The first link member 7, the intermediate link members 8A and 8B, and the second link member 9 correspond to a plurality of link members described in claims.

On the joint 5 located on the base end side of the robot 2, a motor 11 is installed. The joint 6 located on the tip end side of the robot 2 has a double joint structure composed of the first link member 7, the intermediate link members 8A and 8B, and the second link member 9 and has a first joint portion 6A provided between the first link member 7 and the intermediate link members 8A and 8B as well as a second joint portion 6B provided between the intermediate link members 8A and 8B and the second link member 9. Two motors 12 and 13 are installed on the second joint portion 6B located on the tip end side of the joint 6. A detailed structure of the joint 6 will be described later.

The first link member 7 is connected to a floor portion through the joint 5. The intermediate link members 8A and 8B are connected to the first link member 7 rotatably around a first joint axis 14 of the first joint portion 6A through the first joint portion 6A located on the base end side of the joint 6. The second link member 9 is connected to the intermediate link members 8A and 8B rotatably around a second joint axis 15 of the second joint portion 6B through the second joint portion 6B located on the tip end side of the joint 6. This second link member 9 is composed of a first small link member 9A and a second small link member 9B. The first small link member 9A and the second small link member 9B are connected with each other capable of relative rotation around a rotation axis 17 along a longitudinal direction of the entire second link member 9. The first small link member 9A and the second small link member 9B correspond to two small link members described in claims.

The robot hand 10 is mounted on a tip end of the second small link member 9B located on the tip end side of the second link member 9.

In the aforementioned basic configuration, the robot 2 can move the robot hand 10 closer to a gripping target 18 by driving the first link member 7, the intermediate link members 8A and 8B, and the second link member 9 by driving each of motors 11, 12, and 13. After the gripping target 18 is gripped by the robot hand 10, the gripping target 18 can be moved by further driving the first link member 7, the intermediate link members 8A and 8B, and the second link member 9.

The microcomputer 3 controls each of the motors 11, 12, and 13 in collaboration by generating/transmitting control instructions corresponding to each of the motors 11, 12, and 13 of the robot 2, respectively, and controls gripping by the robot hand 10 in the manner that the entire robot 2 can be smoothly operated.

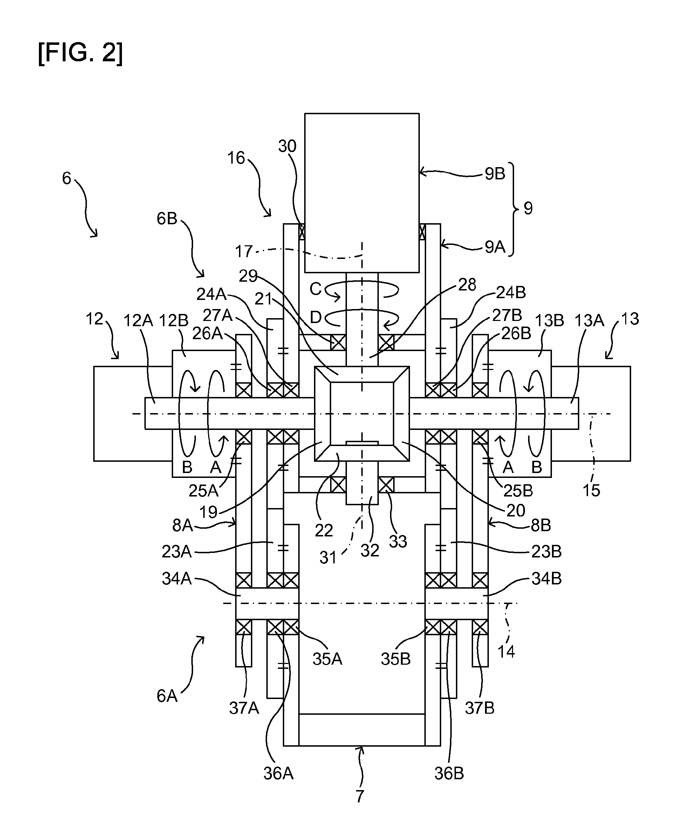

Subsequently, by using Fig. 2, the detailed structure of the joint 6 located on the tip end side of the robot 2 will be described. In Fig. 2, the joint 5, the robot hand 10 and the like located on the base end side of the robot 2 are not shown. Moreover, a double line illustrated across two members in Fig. 2 indicates that the two members are connected to each other.

As illustrated in Fig. 2, the joint 6 has a double joint structure composed of the first link member 7, the intermediate link members 8A and 8B, and the second link member 9 and has the first joint portion 6A and the second joint portion 6B, a bevel gear 19 (first bevel gear) and a bevel gear 20 (second bevel gear) disposed on the second joint axis 15 facing each other, the motor 12 (first actuator) for transmitting a driving force to the bevel gear 19, the motor 13 (second actuator) for transmitting a driving force to the bevel gear 20, a bevel gear 21 (third bevel gear) and a bevel gear 22, two spur gears 23A and 23B, and two spur gears 24A and 24B.

The motor 12 has an output shaft 12A (rotor) and a stator 12B and is disposed on the second joint axis 15 on an outer wall portion of the intermediate link member 8A in the manner that an axis of the output shaft 12A accords with the second joint axis 15. The stator 12B is connected to the intermediate link member 8A. The output shaft 12A is connected to the bevel gear 19 and is supported rotatably around the second joint axis 15 by bearings 25A, 26A, and 27A with respect to the intermediate link member 8A, the spur gear 24A, and the first small link member 9A located on the base end side of the second link member 9. Therefore, by rotating the output shaft 12A around the second joint axis 15 by driving of the motor 12, it is possible to rotate the bevel gear 19 around the second joint axis 15.

The motor 13 has an output shaft 13A (rotor) and a stator 13B and is disposed on the second joint axis 15 on the outer wall portion of the intermediate link member 8B in the manner that an axis of the output shaft 13A accords with the second joint axis 15. The stator 13B is connected to the intermediate link member 8B. The output shaft 13A is connected to the bevel gear 20 and is supported rotatably around the second joint axis 15 by bearings 25B, 26B, and 27B with respect to the intermediate link member 8B, the spur gear 24B, and the first small link member 9A located on the base end side of the second link member 9. Therefore, by rotating the output shaft 13A around the second joint axis 15 by driving of the motor 13, it is possible to rotate the bevel gear 20 around the second joint axis 15.

The bevel gear 21 is meshed with both the bevel gears 19 and 20 and is connected to the second small link member 9B located on the tip end side of the second link member 9 by a rotating shaft 28. The rotating shaft 28 is supported rotatably around the rotation axis 17 which accords with the axis of the rotating shaft 28 by a bearing 29.

Moreover, the second small link member 9B connected to the bevel gear 21 through the rotating shaft 28 has its tip end portion fitted with and inserted into the inside of the first small link member 9A. Though not particularly shown, for example, the fitting portion of the second small link member 9B is formed into a cylindrical shape, and the fitting portion of the first small link member 9A is formed having an inner diameter substantially equal to an outer periphery of the cylindrical portion of the second small link member 9B. Thus, the first small link member 9A and the second small link member 9B are connected with each other capable of relative rotation around the rotation axis 17 or in other words, capable of relative twist displacement, and a twist joint portion 16 is composed of those fitting portions. Moreover, a bearing 30 is provided between the inner periphery of the first small link member 9A and the outer periphery of the second small link member 9B, and this bearing 30 smoothens sliding of the first small link member 9A and the second small link member 9B in a radial direction and prevents removal between the first small link member 9A and the second small link member 9B in a thrust direction.

The bevel gear 22 is meshed with both the bevel gears 19 and 20 and is connected to the rotating shaft 32. The rotating shaft 32 is supported by a bearing 33 rotatably around a rotation axis 31 according with an axis of the rotating shaft 32.

In this embodiment, if the bevel gears 19 and 20 are rotated in the same direction, these bevel gears 21 and 22 rotate around the second joint axis 15, while if the bevel gears 19 and 20 are rotated in the different directions, they rotate around the rotation axes 17 and 31. Therefore, the bevel gears 19 and 20 are rotated in the same direction by driving of the motors 12 and 13, and the bevel gears 21 and 22 are rotated around the second joint axis 15 in the manner that the second link member 9 and the intermediate link members 8A and 8B are relatively rotated around the second joint axis 15 or in other words, the second link member 9 can be rotated and operated with respect to the intermediate link members 8A and 8B. Moreover, the bevel gears 19 and 20 are rotated in the different directions by driving of the motors 12 and 13, and the bevel gears 21 and 22 are rotated around the rotation axes 17 and 31 in the manner that the first small link member 9A and the second small link member 9B are relatively rotated around the rotation axis 17, or in other words, the second small link member 9B can be rotated around the rotation axis 17.

The spur gears 23A and 23B are disposed rotatably around shaft members 34A and 34B disposed along the first joint axis 14 and are fixed to the first link member 7. The shaft member 34A is supported by bearings 35A, 36A, and 37A rotatably around the first joint axis 14 with respect to the first link member 7, the spur gear 23A, and the intermediate link member 8A in the manner that its axis accords with the first joint axis 14. The shaft member 34B is supported by bearings 35B, 36B, and 37B rotatably around the first joint axis 14 with respect to the first link member 7, the spur gear 23B, and the intermediate link member 8B in the manner that its axis accords with the first joint axis 14.

The spur gears 24A and 24B are disposed rotatably around the output shafts 12A and 13A disposed along the second joint axis 15 and are fixed to the first small link member 9A located on the base end side of the second link member 9 and are also meshed with the spur gears 23A and 23B.

The spur gears 23A and 23B as well as the spur gears 24A and 24B enable synchronization of rotating operations of the first link member 7 and the second link member 9 with respect to the intermediate link members 8A and 8B in the manner that a relative angle between the second link member 9 and the intermediate link members 8A and 8B becomes substantially equal to the relative angle between the first link member 7 and the intermediate link members 8A and 8B. That is, when the bevel gears 19 and 20 are rotated in the same direction by driving of the motors 12 and 13, and when the second link member 9 is rotated and operated with respect to the intermediate link members 8A and 8B, the spur gears 24A and 24B fixed to the second link member 9 are rotated. With that rotation, the spur gears 23A and 23B meshed with the spur gears 24A and 24B are rotated in a direction opposite to that of the spur gears 24A and 24B only by the same rotation angle, and the first link member 7 to which the spur gears 23A and 23B are fixed and the intermediate link members 8A and 8B can be similarly relatively rotated and operated. The spur gears 23A and 23B as well as the spur gears 24A and 24B correspond to rotation synchronization members described in claims, in which the spur gears 23A and 23B correspond to first spur gears and the spur gears 24A and 24B correspond to second spur gears.

In this embodiment, a direction (a direction indicated by an arrow A in Fig. 2) rotating clockwise when the bevel gear 20 is seen from the bevel gear 19 is assumed to be an A direction, and a direction rotating counterclockwise (a direction indicated by an arrow B in Fig. 2) is assumed to be a B direction. Moreover, a direction (a direction indicated by an arrow C in Fig. 2) rotating clockwise when the bevel gear 22 is seen from the bevel gear 21 is assumed to be a C direction, and a direction rotating counterclockwise (a direction indicated by an arrow D in Fig. 2) is assumed to be a D direction.

Subsequently, operations of the first link member 7, the intermediate link members 8A and 8B, and the second link member 9 in this embodiment will be described.

First, a case in which the bevel gears 19 and 20 are rotated in the same direction will be described.

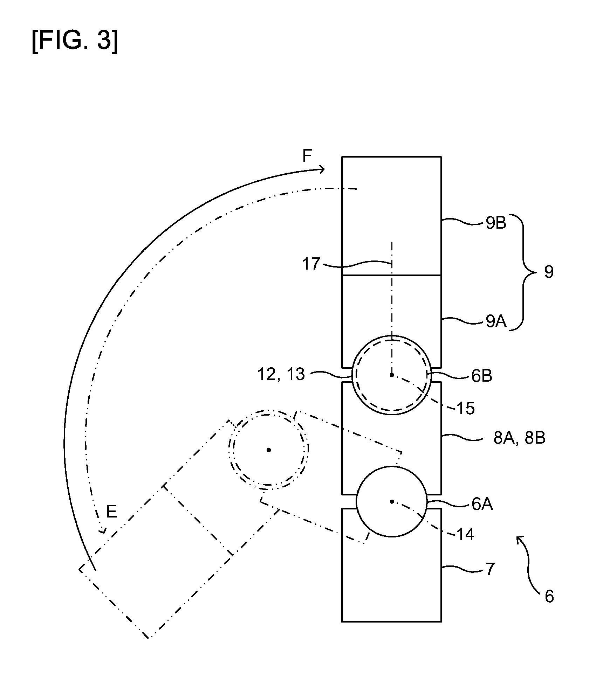

As illustrated in Figs. 2 and 3, if the bevel gears 19 and 20 are rotated in the A direction by driving of the motors 12 and 13, for example, the bevel gears 19 and 20 impart a rotating force to the bevel gears 21 and 22 using the rotation axes 17 and 31 as center axes in mutually opposing directions. Specifically, to the bevel gear 21, the bevel gear 19 imparts the rotating force in the D direction and the bevel gear 20 imparts the rotating force in the C direction. Moreover, to the bevel gear 22, the bevel gear 19 imparts the rotating force in the C direction and the bevel gear 20 imparts the rotating force in the D direction. As such, since the rotating forces in the C direction and the D direction are imparted to the bevel gears 21 and 22 at the same time, the bevel gears 21 and 22 are not rotated around the rotation axes 17 and 31. On the other hand, since the rotating force in the A direction acts on the bevel gears 21 and 22 at a meshed surface between the bevel gears 19 and 20, the bevel gears 21 and 22 rotate in the A direction around the second joint axis 15 along the bevel gears 19 and 20. As a result, the second link member 9 is rotated and operated in the A direction with respect to the intermediate link members 8A and 8B, that is, it performs a rotating operation in the A direction around the second joint axis 15, and the spur gears 24A and 24B rotate in the A direction around the second joint axis 15. Along with this rotation, the spur gears 23A and 23B rotate in the B direction around the first joint axis 14 only by the same rotation angle as the spur gears 24A and 24B, the first link member 7 is rotated and operated in the B direction with respect to the intermediate link members 8A and 8B, that is, it performs the rotating operation in the B direction around the first joint axis 14. Therefore, if the bevel gears 19 and 20 are rotated in the A direction, the first link member 7, the intermediate link members 8A and 8B, and the second link member 9 are driven in a bending direction (a direction indicated by an arrow E in Fig. 3), and the joint 6 performs a bending operation.

Moreover, if the bevel gears 19 and 20 are rotated in the B direction by driving of the motors 12 and 13, for example, the bevel gears 19 and 20 impart a rotating force to the bevel gears 21 and 22 using the rotation axes 17 and 31 as the center axes in mutually opposing directions similarly to the above. Specifically, to the bevel gear 21, the bevel gear 19 imparts the rotating force in the C direction and the bevel gear 20 imparts the rotating force in the D direction. Moreover, to the bevel gear 22, the bevel gear 19 imparts the rotating force in the D direction and the bevel gear 20 imparts the rotating force in the C direction. Thus, the bevel gears 21 and 22 do not rotate around the rotation axes 17 and 31. On the other hand, since the rotating force in the B direction acts on the bevel gears 21 and 22 at a meshed surface between the bevel gears 19 and 20, the bevel gears 21 and 22 rotate in the B direction around the second joint axis 15 along the bevel gears 19 and 20. As a result, the second link member 9 is rotated and operated in the B direction with respect to the intermediate link members 8A and 8B, that is, it performs a rotating operation in the B direction around the second joint axis 15, and the spur gears 24A and 24B rotate in the B direction around the second joint axis 15. Along with this rotation, the spur gears 23A and 23B rotate in the A direction around the first joint axis 14 only by the same rotation angle as the spur gears 24A and 24B, the first link member 7 is rotated and operated in the A direction with respect to the intermediate link members 8A and 8B, that is, it performs the rotating operation in the A direction around the first joint axis 14. Therefore, if the bevel gears 19 and 20 are rotated in the B direction, the first link member 7, the intermediate link members 8A and 8B, and the second link member 9 are driven in an extending direction (a direction indicated by an arrow F in Fig. 3), and the joint 6 performs an extending operation.

As described above, if the bevel gears 19 and 20 are rotated in the same direction, the first link member 7, the intermediate link members 8A and 8B, and the second link member 9 are driven in the bending or extending direction, and the joint 6 performs a bending or extending operation.

Subsequently, a case in which the bevel gears 19 and 20 are rotated in the different directions will be described.

For example, if the bevel gear 19 is rotated in the A direction and the bevel gear 20 is rotated in the B direction by driving of the motors 12 and 13, the bevel gear 21 rotates in the D direction around the rotation axis 17, and the bevel gear 22 rotates in the C direction around the rotation axis 31. As a result, the second small link member 9B located on the tip end side of the second link member 9 together with the rotating shaft 28 rotates in the D direction around the rotation axis 17, and the rotating shaft 32 rotates in the C direction around the rotation axis 31. On the other hand, since the bevel gears 21 and 22 rotate around the rotation axes 17 and 31 as the center axes, a force for rotating the bevel gears 21 and 22 around the second joint axis 15 does not work on the bevel gears 21 and 22. Thus, the bevel gears 21 and 22 do not rotate around the second joint axis 15.

Moreover, for example, if the bevel gear 19 is rotated in the B direction and the bevel gear 20 is rotated in the A direction by driving of the motors 12 and 13, the bevel gear 21 rotates in the C direction around the rotation axis 17, while the bevel gear 22 rotates in the D direction around the rotation axis 31. As a result, the second small link member 9B located on the tip end side of the second link member 9 together with the rotating shaft 28 rotates in the C direction around the rotation axis 17, and the rotating shaft 32 rotates in the D direction around the rotation axis 31. On the other hand, the force for rotating the bevel gears 21 and 22 around the second joint axis 15 does not work on the bevel gears 21 and 22 similarly to the above. Thus, the bevel gears 21 and 22 do not rotate around the second joint axis 15.

As described above, if the bevel gears 19 and 20 are rotated in the different directions, the second small link member 9B rotates around the rotation axis 17. That is, the first small link member 9A and the second small link member 9B relatively rotate.

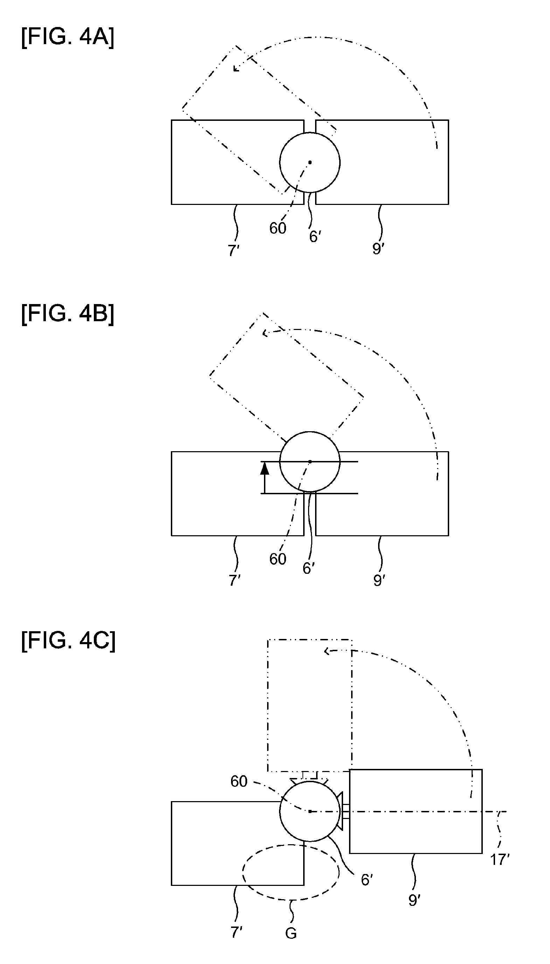

Here, before explaining the effect of this embodiment described above, a comparative example for explaining the effect of this embodiment will be described by using Figs. 4A to 4C.

In a robot in the comparative example illustrated in Fig. 4A, a first link member 7' and a second link member 9' are connected capable of being bent through a joint 6', and a joint axis 60 of the joint 6' is provided at a substantially center position in the thickness direction of the link member. In the robot in such comparative example, by providing the joint axis 60 at the substantially center position in the thickness direction of the link member, when the joint 6' is bent, the first link member 7' and the second link member 9' interfere with each other, a relative angle between these link members 7' and 9' is restricted, and a movable range of the robot is narrowed, which is a problem. Thus, a configuration in which the joint axis 60 is provided by being offset on the one end side in the thickness direction of the link member can be considered. That is, in a robot in another comparative example illustrated in Fig. 4B, the joint axis 60 of the joint 6' is provided by being offset on the one end side in the thickness direction from the substantially center position in the thickness direction of the link member.

On the other hand, a configuration in which a differential mechanism by the bevel gear is provided on the joint axis 60 can be considered. That is, in a robot in still another comparative example illustrated in Fig. 4C, a differential mechanism by the bevel gear for differentially driving the second link member 9' is provided on the joint axis 60 of the joint 6', and the joint axis 60 is offset only with respect to the first link member 7'. In the robot in such comparative example, the joint axis 60 and a rotation axis 17' along the longitudinal direction of the second link member 9' cannot be provided by being offset in the thickness direction of the link member and thus, when the joint 6' is extended, the first link member 7' and the second link member 9' do not become coaxial, and the joint 6' portion (a G portion surrounded by an ellipse in Fig. 4C, for example) becomes bulky. As a result, such a problem occurs that workability and designability of the robot deteriorate.

On the other hand, in the robot 2 in this embodiment, the double joint structure in which the joint 6 is composed of the first link member 6, the intermediate link members 8A and 8B, and the second link member 9 is employed. As a result, when the joint 6 is bent, the first link member 7 and the second link member 9 are prevented from interfering with each other and from restricting the relative angle between these link members 7 and 9, and the movable range of the robot 2 can be made wide. Moreover, the robot 2 in this embodiment has the bevel gears 19 and 20 disposed facing each other on the second joint axis 15, the motor 12 for transmitting the driving force to the bevel gear 19, the motor 13 for transmitting the driving force to the bevel gear 20, and the bevel gears 21 and 22 meshed with both the bevel gears 19 and 20. That is, the configuration is employed that the differential mechanism by the bevel gear is provided on the second joint axis 15. As a result, by driving of the motors 12 and 13, if the bevel gears 19 and 20 are rotated in the same direction, the first link member 7, the intermediate link members 8A and 8B, and the second link member 9 can be driven in a direction to be bent or to be extended, while if the bevel gears 19 and 20 are rotated in the different directions, the first small link member 9A constituting the second link member 9 and the second small link member 9B can be relatively rotated and driven.

As described above, by combining the double joint structure and the differential mechanism, even if the differential mechanism by the bevel gear is provided on the second joint axis 15, the second joint axis 15 and the rotation axis 17 along the longitudinal direction of the second link member 9 do not have to be offset in the thickness direction of the link member. Therefore, when the joint 6 is extended, the first link member 7, the intermediate link members 8A and 8B, and the second link member 9 become coaxial, and occurrence of protrusion on the joint 6 portion or the like can be prevented. Therefore, the robot 2 having excellent workability and designability can be realized while ensuring a wide movable range.

Moreover, particularly in this embodiment, when the bevel gears 19 and 20 are rotated in the same direction by driving of the motors 12 and 13 and the second link member 9 is rotated and operated with respect to the intermediate link members 8A and 8B, the first link member 7 and the intermediate link members 8A and 8B can be relatively rotated and operated similarly by means of the spur gears 23A and 23B and the spur gears 24A and 24B. That is, when the second link member 9 is rotated and operated with respect to the intermediate link members 8A and 8B, the spur gears 24A and 24B fixed to the second link member 9 are rotated. As a result, the spur gears 23A and 23B meshed with the spur gears 24A and 24B are rotated in the direction opposite to the spur gears 24A and 24B only by the same rotation angle and thus, the first link member 7 and the intermediate link members 8A and 8B can be relatively rotated and operated similarly. As a result, the double joint composed of the first link member 7, the intermediate link members 8A and 8B, and the second link member 9 can be operated to be bent or to be extended by the two motors 12 and 13.

Moreover, particularly in this embodiment, both the motors 12 and 13 are configured to be disposed on outer wall portions of the intermediate link members 8A and 8B. As a result, an internal structure of the link member can be simplified and a maintenance work of the motors 12 and 13 can be facilitated.

The embodiment is not limited to the aforementioned contents but is capable of various variations within a range not departing from the gist and technical idea thereof. Such variations will be described below in order.

### (1) If the motor is disposed in the bevel gear:

In the above embodiment, the motors 12 and 13 are disposed on the outer wall portions of the intermediate link members 8A and 8B, but this is not limiting, and the motor may be disposed in the bevel gear.

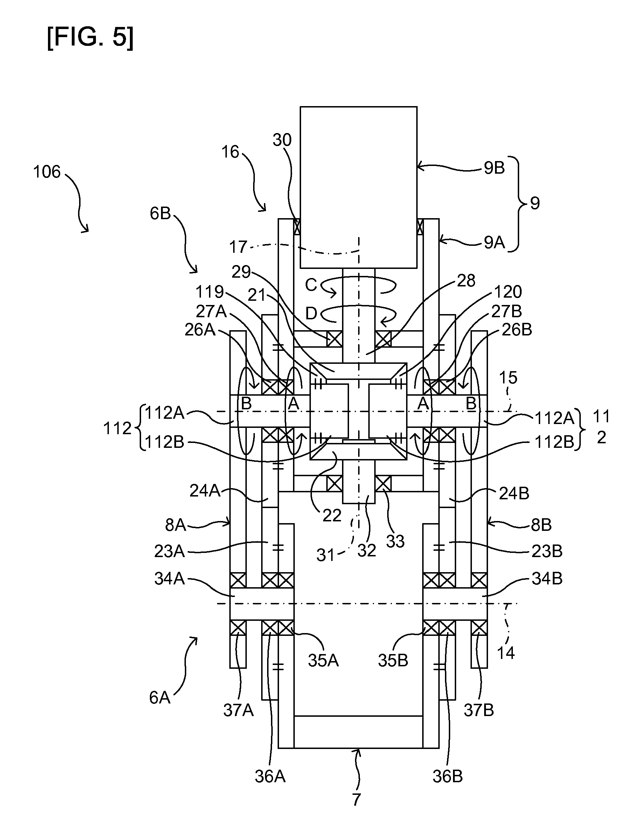

As illustrated in Fig. 5, a configuration of a joint 106 of the robot 2 in this variation is substantially similar to that of the joint 6 of the robot 2 of the above embodiment but this variation is different in a point that, instead of the bevel gear 19 and the bevel gear 20, a bevel gear 119 (first bevel gear) and a bevel gear 120 (second bevel gear) which are arranged facing each other on the aforementioned second joint axis 15 are provided, and instead of the motor 12 and the motor 13, a motor 112 (first actuator) for transmitting a driving force to the bevel gear 119 and a motor 113 (second actuator) for transmitting a driving force to the bevel gear 120 are provided.

The motor 112 has an output shaft 112A (rotor) and a stator 112B and is disposed on the second joint axis 15 in the bevel gear 119 in the manner that the axis of the output shaft 112A accords with the second joint axis 15. The stator 112B is connected to the bevel gear 119. The output shaft 112A is connected to the aforementioned intermediate link member 8A and is supported by the bearings 26A and 27A rotatably around the second joint axis 15 with respect to the aforementioned spur gear 24A and the first small link member 9A located on the base end side of the second link member 9.

The motor 113 has an output shaft 113A (rotor) and a stator 113B and is disposed on the second joint axis 15 in the bevel gear 120 in the manner that the axis of the output shaft 113A accords with the second joint axis 15. The stator 113B is connected to the bevel gear 120. The output shaft 113A is connected to the aforementioned intermediate link member 8B and is supported by the bearings 26B and 27B rotatably around the second joint axis 15 with respect to the aforementioned spur gear 24B and the first small link member 9A located on the base end side of the second link member 9.

The configuration of the joint 106 other than the above is similar to that of the joint 6 of the robot 2 in the above embodiment.

In this variation, by rotating the output shafts 112A and 113A in the same direction by driving of the motors 112 and 113, the bevel gear 119 and the intermediate link member 8A are relatively rotated, and the bevel gear 120 and the intermediate link member 8B can be relatively rotated in the same direction as that of the relative rotation of the bevel gear 119 and the intermediate link member 8A. If the bevel gear 119 and the intermediate link member 8A are relatively rotated and the bevel gear 120 and the intermediate link member 8B are relatively rotated in the same direction as that of the relative rotation of the bevel gear 119 and the intermediate link member 8A, the aforementioned bevel gears 21 and 22 meshed with both the bevel gears 119 and 120 and the intermediate link members 8A and 8B are relatively rotated around the second rotation axis 15. Moreover, if the output shafts 112A and 113A are to be rotated in the different directions by driving of the motors 112 and 113, since the output shafts 112A and 113A cannot be rotated as they are connected to the intermediate link members 8A and 8B, the bevel gears 119 and 120 connected to the stators 113A and 113B can be rotated in the different directions. If the bevel gears 119 and 120 are rotated in the different directions, the bevel gears 21 and 22 are rotated around the aforementioned rotation axes 17 and 31.

Therefore, by relatively rotating the bevel gear 119 and the intermediate link member 8A by driving of the motors 112 and 113, by relatively rotating the bevel gear 120 and the intermediate link member 8B in the same direction as that of the relative rotation of the bevel gear 119 and the intermediate link member 8A, and by relatively rotating the bevel gears 21 and 22 and the intermediate link members 8A and 8B around the second rotation axis 15, the second link member 9 and the intermediate link members 8A and 8B are relatively rotated around the second joint axis 15. In other words, the second link member 9 can be rotated and operated with respect to the intermediate link members 8A and 8B. Moreover, if the second link member 9 is rotated and operated with respect to the intermediate link members 8A and 8B, the aforementioned spur gears 24A and 24B fixed to the second link member 9 is rotated. Along with this, the aforementioned spur gears 23A and 23B meshed with the spur gears 24A and 24B are rotated in the direction opposite to that of the spur gears 24A and 24B only by the same rotation angle, and the first link member 7 to which the spur gears 23A and 23B are fixed and the intermediate link members 8A and 8B can be relatively rotated and operated similarly. Moreover, by rotating the bevel gears 119 and 120 in the different directions by driving of the motors 112 and 113 and by rotating the bevel gears 21 and 22 around the rotation axes 17 and 31, the first small link member 9A and the second small link member 9B are relatively rotated around the rotation axis 17. In other words, the second small link member 9B can be rotated around the rotation axis 17.

Subsequently, the operations of the first link member 7, the intermediate link members 8A and 8B, and the second link member 9 in this variation will be described in brief.

First, a case in which the bevel gear 119 and the intermediate link member 8A are relatively rotated, and the bevel gear 120 and the intermediate link member 8B are relatively rotated in the same direction as that of the relative rotation of the bevel gear 119 and the intermediate link member 8A will be described.

For example, by rotating the output shafts 112A and 113A in the A direction by driving of the motors 112 and 113, the bevel gear 119 and the intermediate link member 8A are relatively rotated and the bevel gear 120 and the intermediate link member 8B are relatively rotated in the same direction as that of the relative rotation of the bevel gear 119 and the intermediate link member 8A, the second link member 9 is rotated and operated in the B direction with respect to the intermediate link members 8A and 8B, that is, it is rotated and operated in the B direction around the second joint axis 15, and the spur gears 24A and 24B are rotated in the B direction around the second joint axis 15. Along with that, the spur gears 23A and 23B are rotated in the A direction around the first joint axis 14 only by the same rotation angle as that of the spur gears 24A and 24B, and the first link member 7 is rotated and operated in the A direction with respect to the intermediate link members 8A and 8B, that is, it is rotated in the A direction around the first joint axis 14. Therefore, if the output shafts 112A and 113A are rotated in the A direction in the manner that the bevel gear 119 and the intermediate link member 8A are relatively rotated and the bevel gear 120 and the intermediate link member 8B are relatively rotated in the same direction as that of the relative rotation of the bevel gear 119 and the intermediate link member 8A, the first link member 7, the intermediate link members 8A and 8B, and the second link member 9 are driven in the direction to be extended, and the joint 106 is extended and operated.

For example, if the bevel gear 119 and the intermediate link member 8A are relatively rotated by rotating the output shafts 112A and 113A in the B direction by driving of the motors 112 and 113 and the bevel gear 120 and the intermediate link member 8B are relatively rotated in the same direction as that of the relative rotation of the bevel gear 119 and the intermediate link member 8A, the second link member 9 is rotated and operated in the A direction with respect to the intermediate link members 8A and 8B, that is, it is rotated and operated in the A direction around the second joint axis 15, and the spur gears 24A and 24B are rotated in the A direction around the second joint axis 15. Along with that, the spur gears 23A and 23B are rotated around the first joint axis 14 only by the same rotation angle as that of the spur gears 24A and 24B, and the first link member 7 is rotated and operated in the B direction with respect to the intermediate link members 8A and 8B, that is, it is rotated and operated in the B direction around the first joint axis 14. Therefore, if the bevel gear 119 and the intermediate link member 8A are relatively rotated by rotating the output shafts 112A and 113A in the B direction and the bevel gear 120 and the intermediate link member 8B are relatively rotated in the same direction as that of the relative rotation of the bevel gear 119 and the intermediate link member 8A, the first link member 7, the intermediate link members 8A and 8B, and the second link member 9 are driven in the direction to be bent and the joint 106 is bent and operated.

As described above, if the bevel gear 119 and the intermediate link member 8A are relatively rotated and the bevel gear 120 and the intermediate link member 8B are relatively rotated in the same direction as that of the relative rotation of the bevel gear 119 and the intermediate link member 8A, the first link member 7, the intermediate link members 8A and 8B, and the second link member 9 are driven in the direction to be bent or extended, and the joint 106 is bent or extended and operated.

Subsequently, a case in which the bevel gears 119 and 120 are rotated in the different directions will be described.

For example, if the bevel gear 119 is rotated in the A direction and the bevel gear 120 is rotated in the B direction by driving of the motors 112 and 113, the bevel gear 21 is rotated in the D direction around the rotation axis 17, and the bevel gear 22 rotates in the C direction around the rotation axis 31. As a result, the second small link member 9B located on the tip end side of the second link member 9 together with the aforementioned rotating shaft 28 is rotated in the D direction around the rotation axis 17, and the aforementioned rotating shaft 32 is rotated in the C direction around the rotation axis 31. On the other hand, since the bevel gears 21 and 22 are rotated around the rotation axes 17 and 31 as the center axes, the force for rotating the bevel gears 21 and 22 around the second joint axis 15 does not work on the bevel gears 21 and 22. Thus, the bevel gears 21 and 22 do not rotate around the second joint axis 15.

Moreover, for example, if the bevel gear 119 is rotated in the B direction and the bevel gear 120 is rotated in the A direction by driving of the motors 112 and 113, the bevel gear 21 rotates in the C direction around the rotation axis 17, and the bevel gear 22 rotates in the D direction around the rotation axis 31. As a result, the second small link member 9B located on the tip end side of the second link member 9 together with the rotating shaft 28 rotates in the C direction around the rotation axis 17, and the rotating shaft 32 rotates in the D direction around the rotation axis 31. On the other hand, the force for rotating the bevel gears 21 and 22 around the second joint axis 15 does not work on the bevel gears 21 and 22 similarly to the above. Thus, the bevel gears 21 and 22 do not rotate around the second joint axis 15.

As described above, if the bevel gears 119 and 120 are rotated in the different directions, the second small link member 9B rotates around the rotation axis 17. That is, the first small link member 9A and the second small link member 9B are relatively rotated.

According to this variation, the effects similar to that of the above embodiment can be obtained. Moreover, in this variation, the motors 112 and 113 are both disposed in the bevel gears 119 and 120. As a result, since the motors 112 and 113 can be accommodated in the link members, the robot 2 can be made slim, and workability and designability can be further improved.

### (2) If driving force of the motor is transmitted by using a pulley:

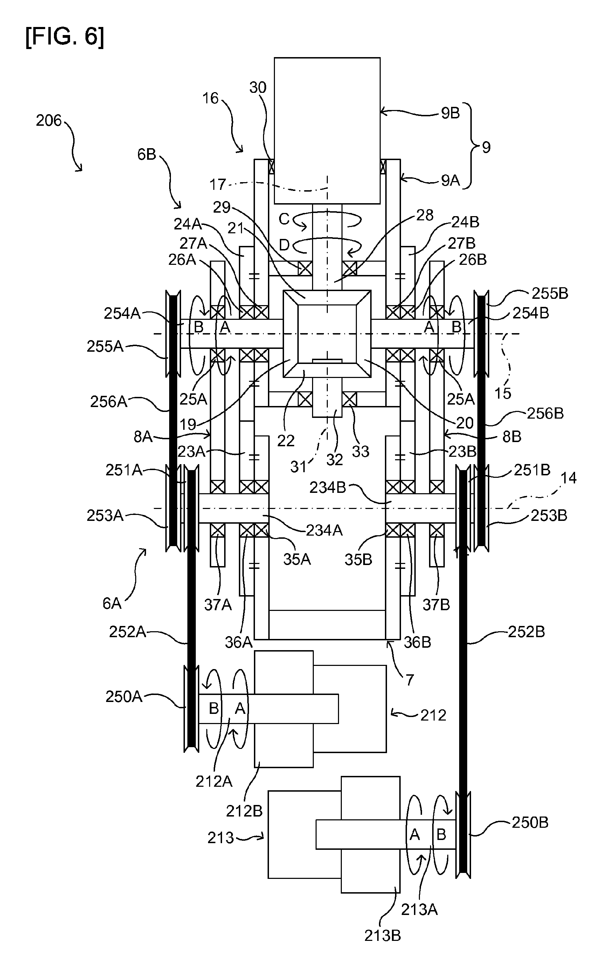

As illustrated in Fig. 6, in a joint 206 of the robot 2 of this variation, a motor 212 (first actuator) and a motor 213 (second actuator) are disposed on the outside of the first link member 7, the intermediate link members 8A and 8B, and the second link member 9.

The motor 212 has an output shaft 212A (rotor) and a stator 212B. To the output shaft 212A, a pulley 250A is fixed, and a belt 252A is extended between this pulley 250A and a pulley 251A fixed to a shaft member 234A disposed along the first joint axis 14. The shaft member 234A is supported by the bearings 35A, 36A, and 37A rotatably around the first joint axis 14 with respect to the first link member 7, the spur gear 23A and the intermediate link member 8A in the manner that its axis accords with the first joint axis 14. To this shaft member 234A, a pulley 253A is fixed other than the pulley 251A, and a belt 256A is extended between this pulley 253A and a pulley 255A fixed to a shaft member 254A disposed along the second joint axis 15. The shaft member 254A is connected to the bevel gear 19 and supported by the bearings 25A, 26A, and 27A rotatably around the second joint axis 15 with respect to the intermediate link member 8A, the spur gear 24A, and the first small link member 9A located on the base end side of the second link member 9 in the manner that its axis accords with the second joint axis 15. Therefore, a driving force by driving of the motor 212 can be transmitted to the bevel gear 19 through the pulleys 250A and 251A, the pulleys 253A and 255A, and the shaft member 234A and can rotate the bevel gear 19 around the second joint axis 15. The rotating direction of the output shaft 212A and the rotating direction of the bevel gear 19 become the same. That is, the bevel gear 19 can be rotated in the A direction by rotating the output shaft 212A in the A direction, and the bevel gear 19 can be rotated in the B direction by rotating the output shaft 212A in the B direction.

The motor 213 has an output shaft 213A (rotor) and a stator 213B. To the output shaft 213A, a pulley 250B is fixed, and a belt 252B is extended between this pulley 250B and a pulley 251B fixed to a shaft member 234B disposed along the first joint axis 14. The shaft member 234B is supported by the bearings 35B, 36B, and 37B rotatably around the first joint axis 14 with respect to the first link member 7, the spur gear 23B and the intermediate link member 8B in the manner that its axis accords with the first joint axis 14. To this shaft member 234B, a pulley 253B is fixed other than the pulley 251B, and a belt 256B is extended between this pulley 253B and a pulley 255B fixed to a shaft member 254B disposed along the second joint axis 15. The shaft member 254B is connected to the bevel gear 20 and supported by the bearings 25B, 26B, and 27B rotatably around the second joint axis 15 with respect to the intermediate link member 8B, the spur gear 24B, and the first small link member 9A located on the base end side of the second link member 9 in the manner that its axis accords with the second joint axis 15. Therefore, a driving force by driving of the motor 213 can be transmitted to the bevel gear 20 through the pulleys 250B and 251B, the pulleys 253B and 255B, and the shaft member 234B and can rotate the bevel gear 20 around the second joint axis 15. The rotating direction of the output shaft 212B and the rotating direction of the bevel gear 20 become the same. That is, the bevel gear 20 can be rotated in the A direction by rotating the output shaft 212B in the A direction, and the bevel gear 20 can be rotated in the B direction by rotating the output shaft 212B in the B direction.

The configuration of the joint 206 other than the above is similar to that of the joint 6 of the robot 2 in the aforementioned embodiment.

According to this variation, since the motors 212 and 213 can be disposed in the first link member 7, as compared with the case in which the motor is disposed on the second joint axis 15 outside the link member, protrusion or the like on the joint 206 portion can be prevented. Therefore, workability and designability can be further improved.

### (3) If driving force of the motor is transmitted by using a bevel gear:

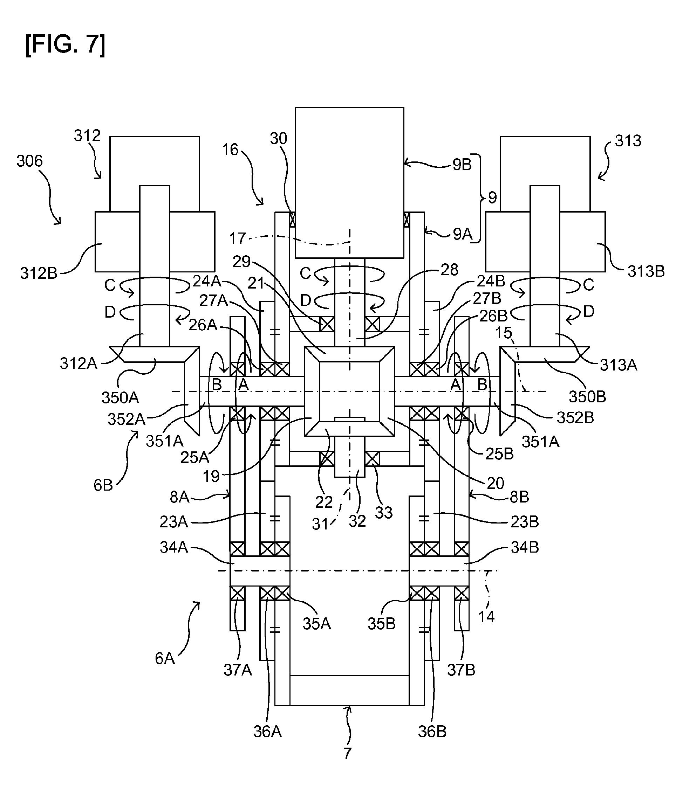

As illustrated in Fig. 7, in a joint 306 of the robot 2 in this variation, a motor 312 (first actuator) and a motor 313 (second actuator) are disposed outside the first link member 7, the intermediate link members 8A and 8B, and the second link member 9.

The motor 312 has an output shaft 312A (rotor) and a stator 312B. To the output shaft 312A, a bevel gear 350A is connected. The bevel gear 350A is meshed with a bevel gear 352A connected to a shaft member 351A disposed along the second joint axis 15. Regarding the shaft member 351A, the side opposite to the side connected to the bevel gear 352A is connected to the bevel gear 19 in the manner that its axis accords with the second joint axis 15 and is supported by the bearings 25A, 26A, and 27A rotatably around the second joint axis 15 with respect to the intermediate link member 8A, the spur gear 24A, and the first small link member 9A located on the base end side of the second link member 9. Therefore, a driving force by driving of the motor 312 can be transmitted to the bevel gear 19 through the bevel gears 350A and 352A and the shaft member 351A and can rotate the bevel gear 19 around the second joint axis 15. The bevel gear 19 can be rotated in the A direction by rotating the output shaft 312A in the C direction, and the bevel gear 19 can be rotated in the B direction by rotating the output shaft 312A in the D direction.

The motor 313 has an output shaft 313A (rotor) and a stator 313B. To the output shaft 313A, a bevel gear 350B is connected. The bevel gear 350B is meshed with a bevel gear 352B connected to a shaft member 351B disposed along the second joint axis 15. Regarding the shaft member 351B, the side opposite to the side connected to the bevel gear 352B is connected to the bevel gear 20 in the manner that its axis accords with the second joint axis 15 and is supported by the bearings 25B, 26B, and 27B rotatably around the second joint axis 15 with respect to the intermediate link member 8B, the spur gear 24B, and the first small link member 9A located on the base end side of the second link member 9. Therefore, a driving force by driving of the motor 313 can be transmitted to the bevel gear 20 through the bevel gears 350B and 352B and the shaft member 351B and can rotate the bevel gear 20 around the second joint axis 15. The bevel gear 20 can be rotated in the B direction by rotating the output shaft 312B in the C direction, and the bevel gear 20 can be rotated in the A direction by rotating the output shaft 312B in the D direction.

The configuration of the joint 306 other than the above is similar to that of the joint 6 of the robot 2 in the aforementioned embodiment.

According to this variation, as compared with the case in which the motor is disposed on the second joint axis 15 outside the link member, protrusion or the like on the joint 306 portion can be prevented. Therefore, workability and designability can be further improved.

### (4) If a friction gear is provided instead of a spur gear:

In the aforementioned embodiment, when the second link member 9 is rotated and operated with respect to the intermediate link members 8A and 8B, the two spur gears 23A and 23B and the two spur gears 24A and 24B are provided in order to relatively rotate and operate the first link member 7 and the intermediate link members 8A and 8B similarly, but this is not limiting. That is, instead of the two spur gears 23A and 23B, two first friction gears disposed rotatably around the first joint axis 14 and fixed to the first link member 7 may be provided, and instead of the two spur gears 24A and 24B, two second friction gears disposed rotatably around the second joint axis 15 and fixed to the second link member 9 and brought into contact with the first friction gear without slip may be provided. The two first friction gears and the two second friction gears correspond to rotation synchronization members described in claims.

In this case, if the bevel gears 19 and 20 are rotated in the same direction by driving of the motors 12 and 13 and the second link member 9 is rotated and operated with respect to the intermediate link members 8A and 8B, the first link member 7 and the intermediate link members 8A and 8B can be relatively rotated and operated similarly by the first friction gear and the second friction gear. That is, if the second link member 9 is rotated and operated with respect to the intermediate link members 8A and 8B, the second friction gear fixed to the second link member 9 is rotated. As a result, the first friction gear in contact with the second friction gear is rotated in the direction opposite to that of the second friction gear only by the same rotation angle, and thus, the first link member 7 and the intermediate link members 8A and 8B can be relatively rotated and operated similarly. As a result, similarly to the aforementioned embodiment, the double joint composed of the first link member 7, the intermediate link members 8A and 8B, and the second link member 9 can be operated to be bent or to be extended by the two motors 12 and 13.

### (5) Others:

In the above, the case in which the robot 2 is a two-joint robot having two joints was explained as an example, but this is not limiting, and the aforementioned embodiment and each variation can be applied also to a multijoint robot having three or more joints.

Moreover, in the above, the joint 6 on the tip end side in the two joints 5 and 6 provided in the robot 2 is configured to have the double joint structure but this is not limiting, and the joint 5 on the base end side may have the double joint structure.

Moreover, other than those described above, methods of the aforementioned embodiment and the variations may be used in combination as appropriate.

Though not particularly exemplified, the aforementioned embodiment and each of the variations are put into practice with various changes within a range not departing from the gist thereof.

### DESCRIPTION OF SYMBOLS

- 2: robot (multijoint robot)
- 5: joint
- 6: joint (joint having double joint structure)
- 7: first link member (link member)
- 8A, B: intermediate link member (link member)
- 9: second link member (link member)
- 9A: first small link member (small link member)
- 9B: second small link member (small link member)
- 12: motor (first actuator)
- 12A: output shaft (rotor)
- 12B: stator
- 13: motor (second actuator)
- 13A: output shaft (rotor)
- 13B: stator
- 14: first joint axis
- 15: second joint axis
- 17: rotation axis
- 19: bevel gear (first bevel gear)
- 20: bevel gear (second bevel gear)
- 21: bevel gear (third bevel gear)
- 23A, B: spur gear (first spur gear)
- 24A, B: spur gear (second spur gear)
- 106: joint (joint having double joint structure)
- 112: motor (first actuator)
- 112A: output shaft (rotor)
- 112B: stator
- 113: motor (first actuator)
- 113A: output shaft (rotor)
- 113B: stator
- 119: bevel gear (first bevel gear)
- 120: bevel gear (second bevel gear)
- 206: joint (joint having double joint structure)
- 212: motor (first actuator)
- 212A: output shaft (rotor)
- 212B: stator
- 213: motor (first actuator)
- 213A: output shaft (rotor)
- 213B: stator
- 306: joint (joint having double joint structure)
- 312: motor (first actuator)
- 312A: output shaft (rotor)
- 312B: stator
- 313: motor (first actuator)
- 313A: output shaft (rotor)
- 313B: stator

## Claims

1. A multijoint robot having a plurality of link members and a plurality of joints, **characterized in that**:
at least one of the plurality of joints comprises:
a double joint structure comprising a first link member, an intermediate link member connected to the first link member rotatably around a first joint axis, and a second link member which is connected to the intermediate link member rotatably around a second joint axis and in which two small link members are connected capable of relative rotation around a rotating axis along a longitudinal direction of the link member;
a first bevel gear and a second bevel gear disposed facing each other on the second joint axis;
a first actuator configured to transmit a driving force to the first bevel gear and a second actuator configured to transmit a driving force to the second bevel gear; and
a third bevel gear meshed with both the first bevel gear and the second bevel gear and connected to one of the small link members by a rotating shaft disposed along the rotating axis.

2. The multijoint robot according to claim 1, wherein:
the joint comprising the double joint structure further comprises a rotation synchronization member configured to synchronize rotating operations of the first link member and the second link member with respect to the intermediate link member in such a manner that a relative angle between the second link member and the intermediate link member becomes substantially equal to a relative angle between the first link member and the intermediate link member.

3. The multijoint robot according to claim 2, wherein:
the rotation synchronization member comprises:
a first spur gear disposed rotatably around the first joint axis and fixed to the first link member; and
a second spur gear disposed rotatably around the second joint axis, fixed to the second link member and meshed with the first spur gear.

4. The multijoint robot according to claim 2, wherein:
the rotation synchronization member comprises:
a first friction gear disposed rotatably around the first joint axis and fixed to the first link member; and
a second friction gear disposed rotatably around the second joint axis, fixed to the second link member and brought into contact with the first friction gear without slip.

5. The multijoint robot according to any one of claims 1 to 4, wherein:
each of the first actuator and the second actuator comprises a rotor and a stator and is disposed on the second joint axis, respectively;
regarding the first actuator, the stator is connected to the intermediate link member, and the rotor is connected to the first bevel gear; and
regarding the second actuator, the stator is connected to the intermediate link member, and the rotor is connected to the second bevel gear.

6. The multijoint robot according to any one of claims 1 to 4, wherein:
each of the first actuator and the second actuator comprises a rotor and a stator and is disposed on the second joint axis, respectively;
regarding the first actuator, which is disposed in the first bevel gear, the stator is connected to the first bevel gear, and the rotor is connected to the intermediate link member; and
regarding the second actuator, which is disposed in the second bevel gear, the stator is connected to the second bevel gear, and the rotor is connected to the intermediate link member.
